# EUROPEAN PATENT SPECIFICATION

(11) **EP 1 345 425 B1**
(45) Date of publication and mention of the grant of the patent: **11.05.2005**
(21) Application number: 02251822.9
(22) Date of filing: 14.03.2002
(51) Int. Cl.: H04N 5/445

(54) **Method and digital television unit for operating broadcast applications**
Verfahren und digitale Fernseheinheit zum Betrieb von Fernsehanwendungen
Procédé et téléviseur numérique pour des applications de télédiffusion

(43) Date of publication of application: 17.09.2003
(73) Proprietor: Sony Service Centre (Europe) N.V., 1840 Londerzeel (BE)
(72) Inventor: Cobbaert, Hubert, 1750 Lennik (BE); Steenput, Eli, 1740 Ternat (BE); Alouini, Ilies, 1030 Brussels (BE)
(74) Representative: Ayers, Martyn Lewis Stanley

(56) References cited:
- EP-A- 1 154 643
- WO-A-96/38008
- GB-A- 2 306 829
- US-B1- 6 182 287

## Description

The present invention relates to a method and digital television unit for operating broadcast applications, in particular for operating broadcast applications and resident applications together in a digital television unit.

Digital television equipment is now well known and various digital television units are available, for instance integrated digital television receivers and set top boxes for use with television displays. There are also various standards, such as DVB, governing broadcast of digital television services.

It has been proposed to provide broadcast applications within the broadcast stream and various standards, such as MHP and MHEG, exist to govern the broadcast of these applications. A broadcast application may be downloaded by a television unit. The broadcast application can then be auto started or activated by a user and run so as to provide from the broadcaster additional services and functionality to the user.

WO 96/38008 concerns a digital television system for receiving a stream of data packets representing video and audio information in compressed form, such as MPEG, and which also includes on-screen display provisions for displaying graphics. Static graphics are stored in "bit-mapped" form, whereas animated graphic images are stored in the same compressed form, eg MPEG, as the payload data representing the received video images.

EP-A-1 154 643 concerns a method and system for using a single on-screen display pixmap across multiple video raster sizes by using multiple headers. It discloses the use of an OSD pixel or bitmap memory block. Sub-picture data from a transport decoder is used to provide data for an OSD module and the OSD module processes the sub-picture data and other information to generate pixel-mapped data. A controller generates a single pixel map and associated pixel-map headers and stores them in the OSD pixel map and OSD header blocks of a memory and an output multiplexer combines the output of a video display unit with the output of the OSD display unit. The present invention is based on the recognition that the broadcast applications could be operated in a television unit having its own resident applications and could make use of resources available in the television unit. In other words, by using resident applications, the functionality of the television unit can be created by operating applications which are resident in the television unit. At the most basic level, these applications might merely allow volume, brightness, contrast, etc to be adjusted and provide the user with a graphic display on the television screen. However, the present application is particularly concerned with more sophisticated resident applications, for instance providing an electronic program guide (EPG), a channel index or channel information.

Particularly in the case of integrated digital television receivers, it becomes possible for the broadcast applications and resident applications to operate on the same platform and make use of common resources. However, the present invention is based on a recognition of problems in implementing a system such as this.

According to the present invention, there is provided a method of operating broadcast applications and resident applications together in a digital television unit, the broadcast applications being downloaded from a broadcast stream, the method including:
providing a video map memory for storing video pixel data down loaded from the broadcast stream;
providing one or more broadcast map memories for broadcast applications and one or more resident map memories for resident applications, each map memory storing pixel data for display on a display, the broadcast and resident applications respectively causing broadcast and resident pixel data to be stored in the respective map memories as required; and
selecting one of a) said one or more broadcast map memories and b) said one or more resident map memories so as to display selectively data from a respective one of the broadcast applications and the resident applications.

According to the present invention, there is also provided a digital television unit for operating broadcast applications and resident applications together on a common platform, the broadcast applications being downloaded from a broadcast stream, the unit induding:
a video map memory for storing video pixel data down loaded from the broadcast stream;
one or more broadcast map memories for broadcast applications and one or more resident map memories for resident applications, each map memory storing pixel data for display on a display, the broadcast and resident applications respectively causing broadcast and resident pixel data to be stored in the respective map memories as required; and
a processor for selecting one of a) said one or more broadcast map memories and b) said one or more resident map memories so as to display selectively data from a respective one of the broadcast applications and the resident applications.

In this way, when a user requires a resident application, any images to be displayed by the resident application are provided quickly and smoothly. In contrast, if map memories are shared between the broadcast and resident applications, switching to a resident application is not at all smooth, since the images required by the resident application have to be redrawn. Furthermore, where the display is managed as a scarce resource (since there is only one display) switching to the resident application requires a loss of resource ownership and the need to re-reserve resources.

By virtue of the present invention, efficient switching between applications may be achieved while still making use of the benefits of providing resident applications for the functionality of the digital television unit and allowing broadcast applications to share the resources of the resident applications.

The map memories are preferably pixel maps.

Preferably, when a user selects a resident application, said one or more resident pixel maps are selected for displaying data on the display whereas, otherwise, said one or more broadcast pixel maps are selected for displaying data on the display.

In this way, the images required for the resident application are always prepared and available such that they can immediately be provided for display when the resident application is selected. This can occur irrespective of whether a broadcast application is running and displaying images or whether no broadcast application is running and any broadcast images are transparent such that only video data is being displayed.

Preferably broadcast pixel maps are provided respectively for storing wallpaper pixel data and graphics pixel data from a broadcast application and resident pixel maps are provided respectively for storing wallpaper pixel data and graphics pixel data from a resident application.

In this way, a broadcast application may store the required graphics and wallpaper data of a display stack simultaneously with a resident application storing the required resident graphics and wallpaper.

Preferably, a video pixel map is provided for storing video pixel data downloaded from the broadcast stream, video pixel data from the video pixel map being used for display irrespective of selection of the broadcast or resident pixel maps.

In this way, selection between the broadcast and resident applications does not require any re-mapping of the video data. The same video pixel map is provided irrespective of whether a broadcast application or a resident application is running and the display output from a display stack is created merely by selecting the appropriate pixel maps.

Preferably, the video pixel data of the video pixel map is combined with the wallpaper pixel data and the graphics pixel data of one of a) the broadcast pixel maps and b) the resident pixel maps according to the step of selecting.

Preferably, graphics pixel data, video pixel data and wallpaper pixel data have respective transparency values and, at each position for display, the respective pixel data are blended according to the transparency values.

This enables the graphics data, video data and wallpaper data to be created and written to their respective pixel maps independently such that the final image for display can be created easily by combining the data stored in the pixel maps.

Preferably, the broadcast and resident applications are able to share the same resources in the digital television unit.

Hence, a common graphics library may be provided by which broadcast and resident applications can both generate graphics pixel data for respective broadcast and resident pixel maps.

Similarly, a common decoder may be provided by which broadcast and resident applications can both generate wallpaper pixel data for respective broadcast and resident pixel maps.

The broadcast applications may conform to any known standard for digital receivers. However, they preferably conform to a standard, such as MHP or MHEG.

It will be appreciated that the present invention can be embodied in software and, hence, provided as a computer program or as a computer program product having computer code stored on a computer readable medium.

The invention will be more clearly understood from the following description, given by way of example only, with reference to the accompanying drawings, in which:
Figure 1 illustrates a television unit in the form of a set top box;
Figure 2 illustrates a television unit in the form of an integrated receiver;
Figure 3 illustrates schematically the basic functionality of the television unit.
Figure 4 illustrates a display stack;
Figure 5 illustrates a normal mode according to the present invention; and
Figure 6 illustrates a resident mode according to the present invention.

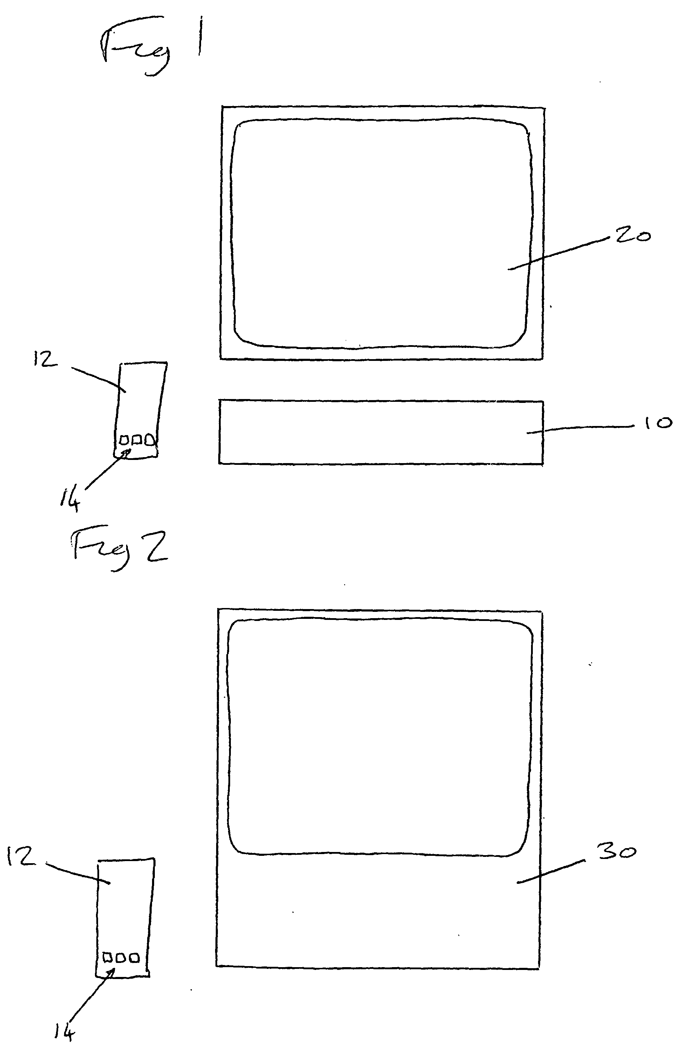

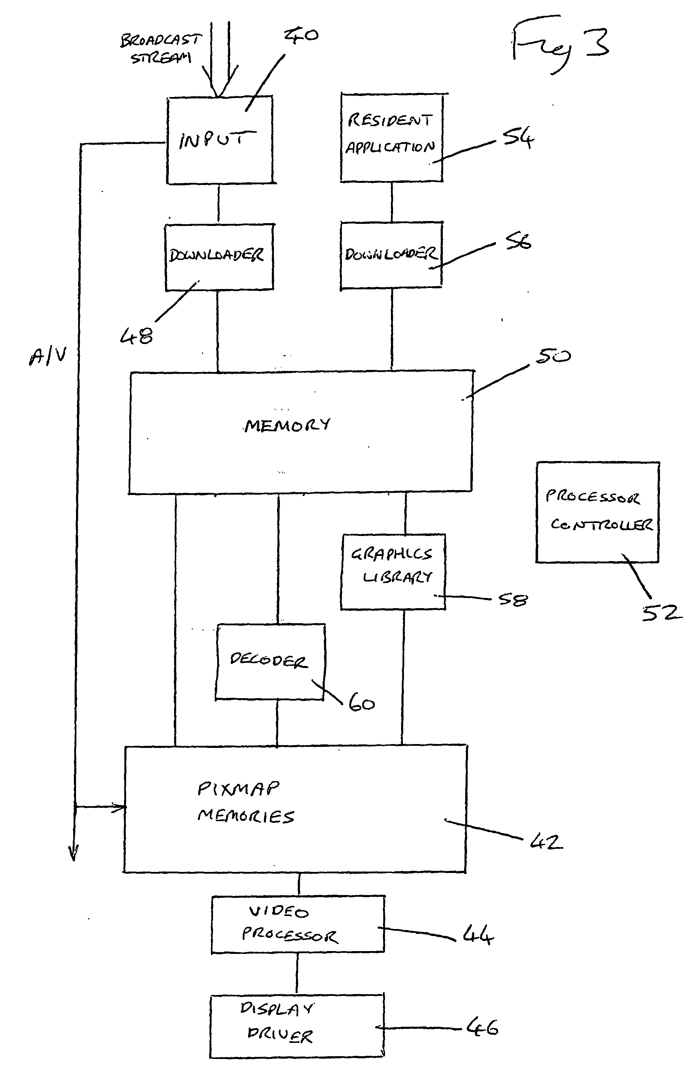

The present application is concerned with digital television units of any type. For instance, as illustrated in Figure 1, the digital television unit may be a set top box 10 in association with a television display 20. Alternatively, as illustrated in Figure 2, the television unit may be an integrated digital receiver 30. In either case, a user input is provided so as to enable the user to control the various functions of the television unit. As illustrated, a remote control 12 is provided with a number of control keys 14.

The television unit 10,30 is able to operate broadcast applications which have been provided in a broadcast stream in accordance with a predetermined standard such as MHP or MHEG. Resident applications are also provided in the television unit by the manufacturer to provide the functionality of the television unit as intended by the manufacturer.

A resident application is an application which is provided by the manufacturer and installed at production time. A typical resident application allows the end-user to change settings of the digital receiver or enables the end-user to tune to another service. In normal mode, a resident application typically runs in background mode without being visible and is activated by a specific set of remote control keys (system keys). Upon receiving a key from this set, it becomes active (resident mode) and may become visible, may hide or resize video, waiting for more end-user input. The concept of resident applications covers all the visible and non-visible applications embedded in the STB/DTV, e.g.: an EPG, a Setup Tool, the process running when TV is in stand-by mode, the clock etc.

A broadcast application is an application being broadcast on a specific (set of) service(s) at a specific time. An example of a broadcast application is an Electronic Program Guide (EPG). Broadcast applications can startup automatically after a channel change. Broadcast applications too can resize the video, rendering (part of the) the background plane visible to the end-user. Broadcast applications are downloaded from the input signal in the same way as video or audio signals.

Both applications have access to a common set of components provided on the STB/DTV (the core stack), e.g.: graphics, tuner, remote control keys, flash memory, disk etc.

These applications could run in Java, but this is not essential. Nevertheless, it should be appreciated that the overall system is software based, preferably taking the form of objects and classes which make use of various resources.

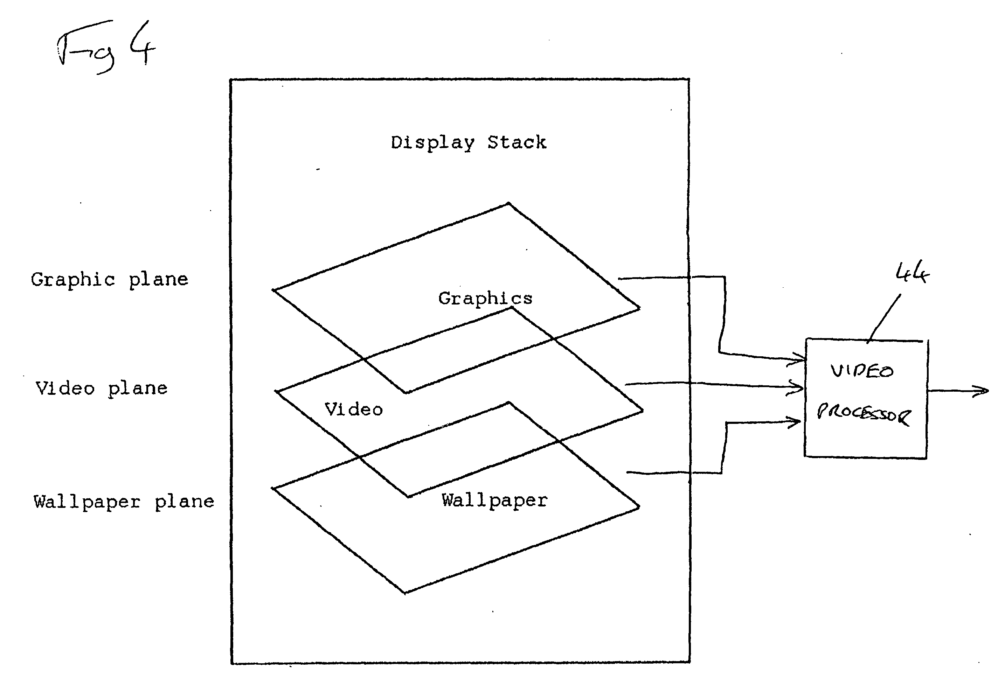

Figure 3 illustrates schematically the functionality of the television unit. The various features of this figure are provided to give an illustration of the functioning of the overall system and are not intended to provide a direct representation of the actual software objects used to operate the system.

A broadcast stream is provided at input 40. This may be derived from any suitable source, such as terrestrial, satellite or cable transmission. The input 40 includes appropriate features, either in software or hardware, for distinguishing various parts of the broadcast stream and separating the data as required. Hence, the audio/video (A/V) of the particular television channel chosen by the user is separated and provided for display. In particular, the video data is written to a pixel map 42. This includes the pixel data for a complete field or frame and is then read out by a video processor 44 and provided to a display driver 46.

Broadcast applications may also be separated in the input 40 and downloaded by a downloader 48 to the television unit. Figure 3 illustrates download as a downloader block 48, though in software terms, an instance of a class loader may be provided for each downloaded broadcast application.

Once downloaded, broadcast applications are stored in the television unit, for instance in a memory 50.

As illustrated in Figure 3, a processor controller 52 is provided. The processor controller 52 controls all of the various parts of the functionality illustrated in Figure 3. In the television unit, there will be various hardware components such as a CPU, but the functionality of the processor controller 52 will usually be implemented in software. The processor controller 52 is responsive to user input, for instance from the remote control 12, to control operation of the television unit.

Thus, the processor controller 52 can cause download of a particular broadcast application according to the input of the user and then operate the television unit in accordance with the downloaded broadcast application.

It is proposed that the internal functionality of the television unit also be achieved in software and, hence, one or more resident applications 54 are also provided. These are stored in memory and loaded 56, for instance with a system class loader, when required.

Broadcast applications are loaded on-demand, by a class loader, from the stream. On the other hand, system applications are loaded on-demand, by a system class loader, from a persistent storage medium (Flash). Thus, a class loader is created when a broadcast application is requested (loaded) and destroyed when the application exits, while the system class loader has the same lifetime as the receiver.

As a consequence, two successive loads of the same broadcast application will not result in a gain of speed; while in case of system application, loaded classes are kept in cache so that a second load of the application should be a little bit faster.

The control keys 14 may include dedicated keys, activation of which cause operation of the corresponding resident application.

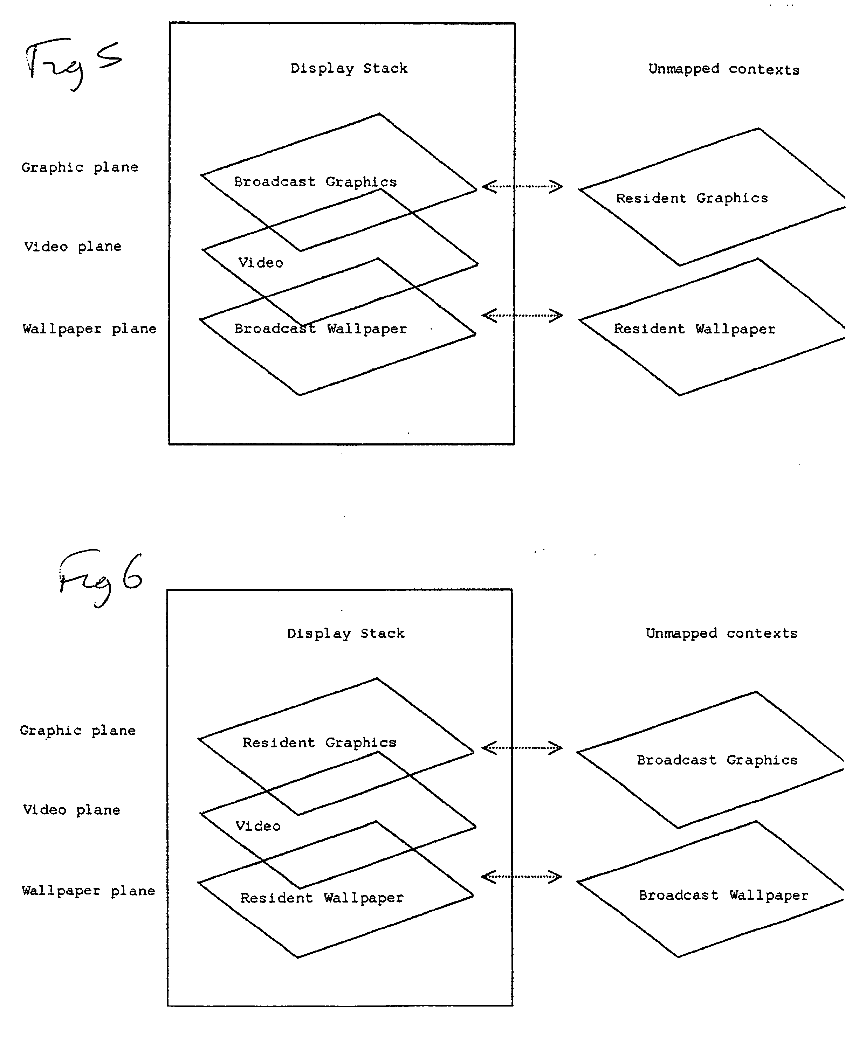

In order for the broadcast and resident applications to display information on the television screen, it is proposed to provide a display stack. This is illustrated in Figure 4. In particular, the display stack includes at least 3 layers made up of a graphics plane, a video plane and a wallpaper plane. For each plane, a pixel map memory 42 is provided. Hence, an application writes the required graphics pixel data to the pixel map memory for the graphics plane and writes the wallpaper pixel data to the pixel map memory for the wallpaper plane.

The video processor 44 is then able to construct the required pixel field or frame. In a simple arrangement, the various layers or planes are in order of priority. Hence, for positions where graphics data exists, the graphics data forms the output pixel. For positions where graphics data does not exist, the video data is displayed or, if no video data exists in those positions, the wallpaper data is displayed.

In a preferred arrangement, the pixel data from the three planes are blended taking into account their transparency level. For the wallpaper plane and the video plane this transparency is either 0 or 100%. In the graphics plane this transparency can take other values than 0 and 100. Thus, on the graphics plane, the pixel data can be semi transparent with respect to the plane below.

Since the operations conducted by the video processor are always the same, then, in order to allow very fast operation, it may be provided in hardware.

Of course, other planes may be provided in the display stack, both above the graphics plane and below the wallpaper plane. However, these are not of significance to the present invention.

Also, where an application is not active, for instance not in use by the user, the graphics data at least may be made "transparent" such that it is ignored and the corresponding video data is displayed.

As illustrated in Figure 3, a graphics library 58 and a decoder 60 are also provided. The graphics library 58 may be used by the applications to create the graphics data for the graphics plane. Similarly, the decoder 60 may be used for decoding data for the wallpaper data.

The present application is particularly concerned with the usage of the graphics plane and the background/wallpaper plane illustrated in Figure 4 when a resident application runs simultaneously with a broadcast application. In particular, it concerns problems relating to the switching between a resident application and a broadcast application.

By its nature, a resident application will be providing a service or functionality for which the end user will expect reasonably high quality. Thus, whenever a resident application is selected, it should be made available very quickly irrespective of whether or not a broadcast application is running. Thus, for example, a user should, at any point in time be able to change the settings of the digital television unit.

Using the display stack of Figure 4, with corresponding pixel map memories for the graphics plane and wallpaper plane, can result in a significant delay in providing the graphics and wallpaper of a resident application to the user. In particular, the graphics and wallpaper of the running broadcast application have to be deleted and the new graphics and wallpaper of the resident application have to be written to the pixel map memories.

The present invention is based on a proposal to attribute graphics/wallpaper resources separately to the resident and broadcast applications. This is illustrated schematically in Figures 5 and 6.

For each of the graphics plane and wallpaper plane, pixel map memories 42 are provided both for a broadcast application and a resident application. However, at any one time, only the pixel maps of the resident application or the pixel maps of the broadcast application are displayed.

As will be explained below, the resident graphics and resident wallpaper will always make their broadcast counterparts disappear from the display stack. In particular, whenever a user selects a resident application, the resident pixel map memories 42 for the resident graphics and resident wallpaper will be displayed while the others will remain invisible.

In normal operation of the digital television unit, the pixel map memories 42 will be arranged to store data as illustrated in Figure 5. In particular, the broadcast and resident graphics and wallpaper data will be stored in their respective pixel map memories. As illustrated, the display stack includes the broadcast graphics, video and broadcast wallpaper. However, until the broadcast application starts up, the broadcast wallpaper data and broadcast graphics data are rendered transparent. In other words, until the broadcast application is started, only the video data from the video pixel map memory is displayed. This may be achieved by using the video processor 44 to retrieve only the data from the video pixel map memory.

When a broadcast application is started, the broadcast graphics, video and broadcast wallpaper are combined and displayed as required. Unless interrupted, the broadcast application will run through its life cycle and eventually terminate and render its graphics and wallpaper transparent again. Thus, in the normal mode, the digital television unit will operate in much the same manner as with the arrangement of Figure 4. However, the resident graphics and resident wallpaper data is already mapped onto respective pixel map memories even though they are not used.

If at any time, a user decides to activate a functionality of a resident application, the arrangement changes to that illustrated in Figure 6. This activation might be achieved by pressing one of the system remote control keys 14 and may be done at any time, whether or not a broadcast application is in its life cycle.

As illustrated by Figure 6, at this stage, the resident graphics and resident wallpaper form part of the display stack. Thus, the resident graphics and resident wallpaper are now combined with the video as required and provided to the display. On the other hand, the graphics and wallpaper of the broadcast application are no longer used for display, but still exist in their respective pixel map memories.

Once the resident application has finished, the system may revert to the normal mode of Figure 5 with the broadcast graphics and broadcast wallpaper once again being mapped to the display. Of course, if no broadcast application is running, the broadcast graphics and wallpaper will be transparent and the digital television unit will revert to showing only video. However, if a broadcast application was running, there will be no need to redraw its graphics objects or to decode the wallpaper image again.

Switching between the modes of Figures 5 and 6 is merely a matter of switching between pixel map memories and choosing which of the data to map for display. The switching can be achieved very quickly without the need for additional processing and may be conducted merely by means of the video processor 44.

If only a single graphics pixel map memory and a single wallpaper pixel map memory is provided for the two types of application, switching between the applications is not smooth at all. Indeed, upon switching, the complete graphics and complete wallpaper have to be redrawn. This is time consuming, since all the graphics have to be redrawn and the wallpapers have to be decoded and rendered over and over again. Furthermore, the display would normally be managed as a scarce resource, since there is only one display and hence resource for the various applications. If the pixel map memories are not duplicated, switching between resident and broadcast applications is accompanied by a loss of resource ownership and the need to re-reserve resources. By providing respective pixel map memories, the switching can be handled in such a way that it is completely transparent to the broadcast application.

It should be appreciated that the present invention is not limited only to graphics and wallpaper planes with corresponding pixel map memories and may also be used with other or additional planes. Similarly, the present invention is not limited to use with only one resident application and one broadcast application. Multiple resident or broadcast applications may be provided each with their own respective pixel map memories. This allows switching between the multiple applications more readily in the same manner as described above.

## Claims

1. A method of operating broadcast applications and resident applications together in a digital television unit, the broadcast applications being downloaded from a broadcast stream, the method including:
providing a video map memory for storing video pixel data downloaded from the broadcast stream;
providing one or more broadcast map memories for broadcast applications and one or more resident map memories for resident applications;
each map memory storing pixel data for display on a display,
the broadcast and resident applications respectively causing broadcast and resident pixel data to be stored in the respective map memories as required; and
selecting one of a) said one or more broadcast map memories and b) said one or more resident map memories so as to display selectively data from a respective one of the broadcast applications and the resident applications.

2. A method according to claim 1 wherein, when a user selects a resident application, said one or more resident map memories are selected for displaying data on the display whereas, otherwise, said one or more broadcast map memories are selected for displaying data on the display.

3. A method according to claim 1 or 2 further including:
providing broadcast map memories respectively for storing wallpaper pixel data and graphics pixel data from a broadcast application; and
providing resident map memories respectively for storing wallpaper pixel data and graphics pixel data from a resident application.

4. A method according to claim 3 wherein the
video pixel data from the video map memory being used for display irrespective of selection of the broadcast or resident pixel maps.

5. A method according to claim 4 further including:
combining the video pixel data of the video map memory with the wallpaper pixel data and the graphics pixel data of one of a) the broadcast map memories and b) the resident map memories according to the step of selecting.

6. A method according to claim 5 wherein graphics pixel data, video pixel data and wallpaper pixel data have respective transparency values and, at each position for display, the respective pixel data are blended according to the transparency values.

7. A method according to any one of claims 3 to 6 further including:
providing a common graphics library by which broadcast and resident applications can both generate graphics pixel data for respective broadcast and resident map memories.

8. A method according to any one of claims 3 to 7 further including:
providing a common decoder by which broadcast and resident applications can both generate wallpaper pixel data for respective broadcast and resident map memories.

9. A digital television unit (10,30) for operating broadcast applications and resident applications together on a common platform, the broadcast applications being downloaded from a broadcast stream, the unit including:
a video map memory for storing video pixel data downloaded from the broadcast stream;
one or more broadcast map memories (42) for broadcast applications and one or more resident map memories (42) for resident applications;
each map memory storing pixel data for display on a display;
the broadcast and resident applications respectively causing broadcast and resident pixel data to be stored in the respective map memories as required; and
a processor (52,44) for selecting one of a) said one or more broadcast map memories and b) said one or more resident map memories so as to display selectively data from a respective one of the broadcast applications and the resident applications.

10. A digital television unit according to claim 9 wherein the processor (52) is configured to react to selection by a user of a resident application so as to select said one or more resident map memories for displaying data on the display whereas, otherwise, to select said one or more broadcast map memories for displaying data on the display.

11. A digital television unit according to claim 9 or 10 wherein
said one or more broadcast map memories include broadcast map memories respectively for storing wallpaper pixel data and graphics pixel data from a broadcast application; and
said one or more resident map memories include resident map memories respectively for storing wallpaper pixel data and graphics pixel data from a resident application.

12. A digital television unit according to claim 11, wherein the video pixel data from the video map memory being used for display irrespective of selection of the broadcast or resident pixel maps.

13. A digital television unit according to claim 12 wherein:
said processor (44) is configured to combine the video pixel data of the video map memory with the wallpaper pixel data and the graphics pixel data of one of a) the broadcast map memories and b) the resident map memories according to the selection.

14. A digital television unit according to claim 13 wherein the processor assigns graphics pixel data, video pixel data and wallpaper pixel data respective transparency values and, at each position for display, blends the respective pixel data according to the transparency values.

15. A digital television unit according to any one of claims 11 to 14 further including:
a common graphics library by which broadcast and resident applications can both generate graphics pixel data for respective broadcast and resident map memories.

16. A digital television unit according to any one of claims 11 to 15 further including:
a common decoder by which broadcast and resident applications can both generate wallpaper pixel data for respective broadcast and resident map memories.

17. A digital television unit for operating broadcast applications and resident applications together on a common platform, the broadcast applications being downloaded from a broadcast stream, the unit being configured to operate according to any one of claims 1 to 8.

18. A method according to any one of claims 1 to 8 or a digital television unit according to any one of claims 9 to 17 for use with broadcast applications conforming to at least one of the MHP and MHEG standard.

19. A computer program comprising program code means for performing all steps of any one of claims 1 to 8 and 18 when said program is run on a computer.

20. A computer program product comprising program code means stored on a computer readable medium for performing the method of any one of claims 1 to 8 and 18 when said program product is run on a computer.

## Patentansprüche

1. Verfahren zum Betrieb von ausgestrahlten oder Rundfunk- Anwendungen und residenten Anwendungen zusammen in einer digitalen Fernseheinheit, wobei die ausgestrahlten Anwendungen von einem Fernsehkanal heruntergeladen werden, wobei das Verfahren enthält:
Bereitstellen eines Video-Abbildungsspeichers zum Speichern von von dem Fernsehkanal heruntergeladenen Videopixeldaten;
Bereitstellen eines oder mehrerer Ausstrahl-Abbildungsspeicher für ausgestrahlte Anwendungen und eines oder mehrerer Resident-Abbildungsspeicher für residente Anwendungen, wobei jeder Abbildungsspeicher Pixeldaten zur Anzeige auf einer Anzeige speichert, wobei die ausgestrahlten und die residenten Anwendungen erforderlichenfalls ein Speichern der ausgestrahlten bzw. der residenten Pixeldaten in die jeweiligen Abbildungsspeicher veranlassen; und
Auswählen eines von a) dem einen oder den mehreren Ausstrahl-Abbildungsspeicher und b) dem einen oder den mehreren Resident-Abbildungsspeicher, um so wahlweise Daten von einer jeweiligen der ausgestrahlten Anwendungen und der residenten Anwendungen anzuzeigen.

2. Verfahren nach Anspruch 1, bei welchem, wenn ein Benutzer eine residente Anwendung auswählt, der eine oder die mehreren Resident-Abbildungsspeicher zum Anzeigen von Daten auf der Anzeige ausgewählt werden, während sonst der eine oder die mehreren Ausstrahl-Abbildungsspeicher zum Anzeigen von Daten auf der Anzeige ausgewählt werden.

3. Verfahren nach Anspruch 1 oder 2, ferner mit:
Bereitstellen von Ausstrahl-Abbildungsspeichern jeweils zum Speichern von Hintergrundpixeldaten und Graphikpixeldaten von einer ausgestrahlten Anwendung; und
Bereitstellen von Resident-Abbildungsspeichern jeweils zum Speichern von Hintergrundpixeldaten und Graphikpixeldaten von einer residenten Anwendung.

4. Verfahren nach Anspruch 3, bei welchem die Videopixeldaten aus dem Video-Abbildungsspeicher unabhängig von der Auswahl der Ausstrahl- oder der Resident-Pixelabbildungen zur Anzeige verwendet werden.

5. Verfahren nach Anspruch 4, ferner mit:
Kombinieren der Videopixeldaten des Video-Abbildungsspeichers mit den Hintergrundpixeldaten und den Graphikpixeldaten eines der a) Ausstrahl-Abbildungsspeicher und der b) Resident-Abbildungsspeicher entsprechend dem Auswahlschritt.

6. Verfahren nach Anspruch 5, bei welchem die Graphikpixeldaten, die Videopixeldaten und die Hintergrundpixeldaten jeweilige Transparenzwerte haben und die jeweiligen Pixeldaten an jeder Anzeigeposition entsprechend den Transparenzwerten gemischt werden.

7. Verfahren nach einem der Ansprüche 3 bis 6, ferner mit
Bereitstellen einer gemeinsamen Graphikbibliothek, durch welche die ausgestrahlten und die residenten Anwendungen beide Graphikpixeldaten für die jeweiligen Ausstrahl- und Resident-Abbildungsspeicher erzeugen können.

8. Verfahren nach einem der Ansprüche 3 bis 7, ferner mit
Bereitstellen eines gemeinsamen Decodierers, durch welchen die ausgestrahlten und die residenten Anwendungen beide Hintergrundpixeldaten für die jeweiligen Ausstrahl- und Resident-Abbildungsspeicher erzeugen können.

9. Digitale Fernseheinheit (10, 30) zum Betreiben von ausgestrahlten Anwendungen und residenten Anwendungen zusammen auf einer gemeinsamen Plattform, wobei die ausgestrahlten Anwendungen von einem Fernsehkanal heruntergeladen werden, wobei die Einheit enthält:
einen Video-Abbildungsspeicher zum Speichern von von dem Fernsehkanal heruntergeladenen Videopixeldaten;
einen oder mehrere Ausstrahl-Abbildungsspeicher (42) für ausgestrahlte Anwendungen und einen oder mehrere Resident-Abbildungsspeicher (42) für residente Anwendungen, wobei jeder Abbildungsspeicher Pixeldaten zur Anzeige auf einer Anzeige speichert, wobei die ausgestrahlten und die residenten Anwendungen erforderlichenfalls ein Speichern der ausgestrahlten bzw. der residenten Pixeldaten in die jeweiligen Abbildungsspeicher veranlassen; und
einen Prozessor (52, 44) zum Auswählen eines von a) einem oder mehreren Ausstrahl-Abbildungsspeicher und b) einem oder der mehreren Resident-Abbildungsspeicher, um so wahlweise Daten von einer entsprechenden der ausgestrahlten Anwendungen und der residenten Anwendungen anzuzeigen.

10. Digitale Fernseheinheit nach Anspruch 9, bei welcher der Prozessor (52) ausgebildet ist, um auf eine Auswahl durch einen Benutzer einer residenten Anwendung zu reagieren, um so den einen oder die mehreren Resident-Abbildungsspeicher zum Anzeigen von Daten auf der Anzeige auszuwählen, und um anderenfalls den einen oder die mehreren Ausstrahl-Abbildungsspeicher zum Anzeigen von Daten auf der Anzeige auszuwählen.

11. Digitale Fernseheinheit nach Anspruch 9 oder 10, bei welcher
der eine oder die mehreren Ausstrahl-Abbildungsspeicher Ausstrahl-Abbildungsspeicher jeweils zum Speichern von Hintergrundpixeldaten und Graphikpixeldaten von einer Fernsehanwendung enthalten; und
der eine oder die mehreren Resident-Abbildungsspeicher Resident-Abbildungsspeicher jeweils zum Speichern von Hintergrundpixeldaten und Graphikpixeldaten von einer residenten Anwendung enthalten.

12. Digitale Fernseheinheit nach Anspruch 11, bei welcher die Videopixeldaten aus dem Video-Abbildungsspeicher unabhängig von einer Auswahl der Ausstrahl- oder der Resident-Pixelabbildungen zur Anzeige verwendet werden.

13. Digitale Fernseheinheit nach Anspruch 12, bei welcher:
der Prozessor (44) ausgebildet ist, um die Videopixeldaten des Video-Abbildungsspeichers mit den Hintergrundpixeldaten und den Graphikpixeldaten eines der a) Ausstrahl-Abbildungsspeicher und der b) Resident-Abbildungsspeicher entsprechend der Auswahl zu kombinieren.

14. Digitale Fernseheinheit nach Anspruch 13, bei welcher der Prozessor den Graphikpixeldaten, den Videopixeldaten und den Hintergrundpixeldaten jeweilige Transparenzwerte zuordnet und die jeweiligen Pixeldaten an jeder Anzeigeposition entsprechend den Transparenzwerten mischt.

15. Digitale Fernseheinheit nach einem der Ansprüche 11 bis 14, ferner mit einer gemeinsamen Graphikbibliothek, durch welche die ausgestrahlten und die residenten Anwendungen beide Graphikpixeldaten für die jeweiligen Ausstrahl- und Resident-Abbildungsspeicher erzeugen können.

16. Digitale Fernseheinheit nach einem der Ansprüche 11 bis 15, ferner mit einem gemeinsamen Decodierer, durch welchen die ausgestrahlten und die residenten Anwendungen beide Hintergrundpixeldaten für die jeweiligen Ausstrahl- und Resident-Abbildungsspeicher erzeugen können.

17. Digitale Fernseheinheit zum Betrieb von ausgestrahlten Anwendungen und residenten Anwendungen zusammen auf einer gemeinsamen Plattform, wobei die ausgestrahlten Anwendungen von einem Fernsehkanal heruntergeladen werden und die Einheit zum Betrieb nach einem der Ansprüche 1 bis 8 ausgebildet ist.

18. Verfahren nach einem der Ansprüche 1 bis 8 oder digitale Fernseheinheit nach einem der Ansprüche 9 bis 17 zur Verwendung mit ausgestrahlten Anwendungen entsprechend wenigstens einem des MHP- und des MHEG-Standards.

19. Computerprogramm mit einer Programmcodeeinrichtung zum Durchführen aller Schritte eines der Ansprüche 1 bis 8 und 18, wenn das Programm auf einem Computer läuft.

20. Computerprogrammprodukt mit einer auf einem computerlesbaren Medium gespeicherten Programmcodeeinrichtung zum Durchführen des Verfahrens nach einem der Ansprüche 1 bis 8 und 18, wenn das Programmprodukt auf einem Computer läuft.

## Revendications

1. Procédé de fonctionnement d'applications de diffusion et d'applications locales dans un téléviseur numérique, les applications de diffusion étant téléchargées depuis un flux de données de diffusion, le procédé comprenant les étapes consistant à :
fournir une mémoire de carte vidéo pour stocker des données pixels vidéo téléchargées depuis un flux de données de diffusion ;
fournir une ou plusieurs mémoires de cartes de diffusion pour des applications de diffusion et une ou plusieurs mémoires de cartes locales pour des applications locales ;
chaque mémoire de carte stockant des données pixels pour l'affichage sur un écran d'affichage ;
les applications de diffusion et locales amenant respectivement les données pixels de diffusion et locales à être stockées dans les mémoires de cartes respectives comme demandé ; et
- sélectionner l'une a) de ladite ou desdites mémoires de cartes de diffusion et b) de ladite ou desdites mémoires de cartes locales de façon à afficher sélectivement des données à partir d'une application respective des applications de diffusion et des applications locales.

2. Procédé selon la revendication 1, dans lequel, lorsqu'un utilisateur sélectionne une application locale, ladite ou lesdites mémoires de cartes locales sont sélectionnées pour afficher des données sur l'écran d'affichage tandis que sinon, ladite ou lesdites mémoires de cartes de diffusion sont sélectionnées pour afficher des données sur l'écran d'affichage.

3. Procédé selon la revendication 1 ou 2 comprenant en outre les étapes consistant à :
fournir des mémoires de cartes de diffusion pour stocker respectivement des données pixels papier peint et des données pixels graphiques à partir d'une application de diffusion ; et
utiliser des mémoires de cartes locales pour stocker respectivement des données pixels papier peint et des données pixels graphiques à partir d'une application locale.

4. Procédé selon la revendication 3, dans lequel les données pixels vidéo provenant de la mémoire de carte vidéo sont utilisées pour l'affichage quelle que soit la sélection des cartes de pixels de diffusion ou locaux.

5. Procédé selon la revendication 4 comprenant en outre l'étape consistant à :
combiner les données pixels vidéo de la mémoire de carte vidéo avec les données pixels papier peint et les données pixels graphiques de l'une a) des mémoires de cartes de diffusion et b) des mémoires de cartes locales selon les étapes de sélection.

6. Procédé selon la revendication 5, dans lequel les données pixels graphiques, les données pixels vidéo et les données pixels papier peint ont des valeurs de transparence respectives et, à chaque position de l'affichage, les données pixels respectives sont mélangées selon les valeurs de transparence.

7. Procédé selon l'une quelconque des revendications 3 à 6, comprenant en outre l'étape consistant à :
utiliser une bibliothèque graphique commune par laquelle les applications de diffusion et locales peuvent toutes deux générer des données pixels graphiques pour les mémoires de cartes de diffusion et locales.

8. Procédé selon l'une quelconque des revendications 3 à 7, comprenant en outre l'étape consistant à :
fournir un décodeur commun par lequel les applications de diffusion et locales peuvent toutes deux générer des données pixels papier peint pour des mémoires de cartes de diffusion et locales respectives.

9. Téléviseur numérique (10, 30) destiné à faire fonctionner des applications de diffusion et des applications locales ensemble sur une plate-forme commune, les applications de diffusion étant téléchargées depuis un flux de données de diffusion, l'unité comprenant :
une mémoire de carte vidéo destinée à stocker des données pixels vidéo téléchargées depuis le flux de données de diffusion ;
une ou plusieurs mémoires de cartes de diffusion (42) pour des applications de diffusion et une ou plusieurs mémoires de cartes locales (42) pour des applications locales ;
chaque mémoire de carte stockant des données pixels pour l'affichage sur un écran d'affichage ;
les applications de diffusion et locales amenant respectivement les données pixels de diffusion et locales à être stockées dans les mémoires de cartes respectives comme demandé ; et
un processeur (52, 44) destiné à sélectionner l'une a) de ladite ou desdites mémoires de cartes de diffusion et b) l'une de ladite ou desdites mémoires de cartes locales de façon à afficher sélectivement des données à partir d'une application respective des applications de diffusion et des applications locales.

10. Téléviseur numérique selon la revendication 9, dans lequel le processeur (52) est configuré pour réagir à la sélection par un utilisateur d'une application locale de façon à sélectionner ladite ou lesdites mémoires de cartes locales pour afficher des données sur l'écran d'affichage, ou sinon, à sélectionner ladite ou lesdites mémoires de cartes de diffusion pour afficher des données sur l'écran d'affichage.

11. Téléviseur numérique selon la revendication 9 ou 10, dans lequel
ladite ou lesdites mémoires de cartes de diffusion comprennent des mémoires de cartes de diffusion pour stocker respectivement des données pixels papier peint et des données pixels graphiques à partir d'une application de diffusion ; et
ladite ou lesdites mémoires de cartes locales comprennent des mémoires de cartes locales pour stocker respectivement des données pixels papier peint et des données pixels graphiques à partir d'une application locale.

12. Téléviseur selon la revendication 11, dans lequel les données pixels vidéo provenant de la mémoire de carte vidéo sont utilisées pour l'affichage quelle que soit la sélection des cartes de pixels de diffusion ou locaux.

13. Téléviseur numérique selon la revendication 12, dans lequel :
ledit processeur (44) est configuré pour combiner les données pixels vidéo de la mémoire de carte vidéo avec les données pixels papier peint et les données pixels graphiques de l'une a) des mémoires de cartes de diffusion et b) des mémoires de cartes locales selon les étapes de sélection.

14. Téléviseur numérique selon la revendication 13, dans lequel le processeur attribue aux données pixels graphiques, aux données pixels vidéo et aux données pixels papier peint des valeurs de transparence respectives et, à chaque position de l'affichage, mélange les données pixels respectives selon les valeurs de transparence.

15. Téléviseur numérique selon l'une quelconque des revendications 11 à 14 comprenant en outre :
une bibliothèque graphique commune par laquelle des applications de diffusion et locales peuvent générer toutes les deux des données pixels graphiques pour des mémoires de cartes de diffusion et locales respectives.

16. Téléviseur numérique selon l'une quelconque des revendications 11 à 15 comprenant en outre :
un décodeur commun par lequel les applications de diffusion et locales peuvent toutes les deux générer des données pixels papier peint pour des mémoires de cartes de diffusion et locales respectives.

17. Téléviseur numérique destiné à faire fonctionner des applications de diffusion et des applications locales ensemble sur une plate-forme commune, les applications de diffusion téléchargées depuis un flux de données de diffusion, l'unité étant configurée pour fonctionner selon l'une quelconque des revendications 1 à 8.

18. Procédé selon l'une quelconque des revendications 1 à 8 ou téléviseur numérique selon l'une quelconque des revendications 9 à 17 à utiliser avec des applications de diffusion conformes à au moins une des normes MHP et MHEG.

19. Programme informatique comprenant un moyen de code de programme destiné à effectuer toutes les étapes de l'une quelconque des revendications 8 à 18 lorsque ledit programme fonctionne sur un ordinateur.

20. Produit de programme informatique comprenant un moyen de code de programme stocké sur un support lisible par l'ordinateur pour effectuer le procédé de l'une quelconque des revendications 1 à 8 et 18, lorsque ledit produit de programme fonctionne sur un ordinateur.
